# EUROPEAN PATENT SPECIFICATION

(11) **EP 3 191 734 B1**
(45) Date of publication and mention of the grant of the patent: **26.02.2020**
(21) Application number: 15756933.6
(22) Date of filing: 04.09.2015
(51) Int. Cl.: F16F 7/104

(54) **A VIBRATION ABSORBING DEVICE FOR REDUCING VIBRATIONS AND SOUNDS IN A STRUCTURE**
VIBRATIONSABSORBIERENDE VORRICHTUNG ZUR REDUZIERUNG VON VIBRATIONEN UND SCHALL IN EINER STRUKTUR
DISPOSITIF D'ABSORPTION DE VIBRATIONS POUR L'ATTÉNUATION DES VIBRATIONS ET DES SONS DANS UNE STRUCTURE

(30) Priority: 09.09.2014 SE 1451045
(43) Date of publication of application: 19.07.2017
(73) Proprietor: A2 Vibcon AB, 252 24 Helsingborg (SE)
(72) Inventor: GUSTAVSSON, Mats, 252 50 Helsingborg (SE)
(74) Representative: Bjerkéns Patentbyrå KB (Stockholm)
(86) International application number: PCT/EP2015/070209
(87) International publication number: WO 2016/037933

(56) References cited:
- EP-A2- 1 506 353
- WO-A1-2006/083222
- WO-A1-2006/083223
- US-A- 3 614 126

## Description

### TECHNICAL FIELD OF THE INVENTION

The present invention refers to a vibration absorbing device for reducing vibrations and sounds in a structure according to the preamble of claim 1, see WO 2006/083223.

In various technical applications, such as in aircraft, motor vehicles, ships, machines and industrial plants, it is desirable to reduce vibrations and sounds. Such vibrations or sounds can have one or several main fundamental frequencies. In aircraft, at least one motor speed, which offers an economically advantageous balance between fuel cost and speed, is typically utilized. This motor speed results in vibrations and sounds with relatively well defined frequencies. In order to reduce these vibrations, it is known to use vibration absorbing devices. The basic principal of these vibration absorbing devices is to create a resonant system having a mass and spring connected to the object or the structure from which the vibration energy is to be absorbed. These vibration absorbing devices may be passive and tuned for an efficient absorption of vibrations and sounds having this defined fundamental frequency. US-A-2004/0134733 discloses such a passive vibration absorbing device.

Alternative vibration absorbing devices with means for adapting to variations in the vibration frequency exist, see US-5,873,559. Such devices are realized with an actuator to change the dynamics of the vibration absorbing device, a sensor to detect the vibration frequency and control logics to control the adaptation. Such adaptive vibration absorbing devices require power for the actuator, the sensor, and the control logics. This makes the existing adaptive vibration absorbing devices more complex, less flexible for installation, and more expensive than conventional vibration absorbing devices.

In various aircraft contexts, for instance propeller-driven aircraft, two or several motor speeds are typically used during flight to optimize performance, fuel consumption or comfort at various flight states. Each motor speed results in dynamic tonal excitation with certain frequencies and consequently a change of the motor speed results in a change of these frequencies. The known passive vibration absorbing devices only give the desired reduction of vibrations and sounds at one of the motor speeds and related frequency. At the other motor speeds the influence of a passive vibration absorbing device may be an increase of the vibrations and sounds.

This problem has been addressed in WO 2006/083223 showing a vibration absorbing device, which thanks to the rotatable spring element will be adaptive. The spring element will adjust itself to such a rotary position that a maximum vibration amplitude is achieved for the oscillating mass of the spring element at vibration excitation at, or in the proximity of, one of the resonance frequencies of the device. The known device may thus, without any actuating members, absorb two different vibration frequencies. WO 2006/083222 shows another similar adaptive vibration absorbing device.

### SUMMARY OF THE INVENTION

One problem which could occur with the known vibration absorbing devices is that the dynamic element may be in a disadvantageous position when a vibration is excited in the structure. Such a disadvantageous position is when the vibration direction of the vibration in the structure is perpendicular to the desired oscillation direction of the dynamic element for a specific frequency. Thus, the dynamic element may be prevented from rotating to the one of the first rotary position and the second rotary position in which the oscillation direction is parallel with the vibration direction, or the adaptation will be so slow that the function of the vibration absorbing device is significantly reduced.

This problem is solved by the device initially defined, which is characterized in that the device comprises a positioning mechanism configured to position the dynamic element in a neutral rotary position, different from the first rotary position and the second rotary position, when the structure does not vibrate.

Such a positioning mechanism will thus prevent the dynamic element from getting locked in an unfavorable rotary position in which its desired oscillation direction is perpendicular to the vibration direction of the excited vibration of the structure.

It is to be noted that the vibration direction of the vibration of the structure is normally known. The positioning mechanism may thus be easily adjusted to a preferred neutral rotary position in a non-vibrating state of the structure when mounting the vibration absorbing device to the structure.

The dynamic element will adjust itself from the neutral rotary position to one of the first rotary position and the second rotary position so that a maximum vibration amplitude is achieved for the oscillating mass of the dynamic element at vibration excitation at, or in the proximity of, one of the resonance frequencies of the vibration absorbing device.

In some cases, for example when the vibration amplitude is very low, the adjusting may be slow. Energy absorption is however, acquired also for intermediate rotary positions between the first rotary position and the second rotary position.

The positioning mechanism may be designed to have a very specific relation between the rotation relative to the neutral rotary position and the moment (torque) given by the positioning mechanism. Such specific relations between rotary position of the dynamic element and the moment may thus include a progressive behavior with a low moment for low rotation and a significant increase of the moment at a certain rotation.

According to an embodiment of the invention, the dynamic element comprises an elastic element extending along the axis of rotation.

The oscillation of the elastic element may be obtained through an energy-absorbing bending of the elastic element. Alternatively, or supplementary, the oscillation of the elastic element may be obtained through an energy-absorbing shearing of the elastic element.

According to a further embodiment of the invention, the elastic element provides said different rigidity of the dynamic element.

According to a further embodiment of the invention, the dynamic element has a mass element provided on the elastic element and forming a dynamic mass.

According to a further embodiment of the invention, the mass element provides said different rigidity.

The different rigidity of the dynamic element may be obtained through a geometric design of the dynamic element, i.e. the elastic element or the mass element, with a different geometric shape along the two main axes, e.g. the dimension along the first main axis may be different from the dimension along the second main axis. The different rigidity of the dynamic element may also be obtained through an orthotropic material of the dynamic element, i.e. the elastic element or the mass element.

According to a further embodiment of the invention, the elastic element comprises an intermediate segment, a first outer segment and a second outer segment, which extend along the axis of rotation and are rotatable in relation to each other and the attachment. Advantageously, the intermediate segment, the first outer segment and the second outer segment may provide said different rigidity. By such an elastic element, the vibration absorbing device may adapt itself to possibly eight different angular resonance frequencies.

According to a further embodiment of the invention, the first outer segment and the second outer segment are mechanically coupled to each other. With such a coupling, a symmetric elastic element is obtained, which may adapt itself to four different angular resonance frequencies.

According to a further embodiment of the invention, the vibration absorbing device comprises two rotary bearings, which are mounted to the attachment and thus are mechanically connected to the structure, wherein the dynamic element at a respective end thereof is journalled in the two rotary bearings to be rotatable around the axis of rotation.

With such a double support of the dynamic element, two elastic elements are formed, one on each side of the mass element or on each side of a central position of the dynamic element, which elastic elements will act as a combined spring and thus reduce the required accuracy of the mounting of the dynamic element. This will allow for proper functioning of the vibration absorbing device even if there is a small difference in properties for the two elastic elements.

Advantageously, at least one of the rotary bearings comprises a pin bearing.

According to a further embodiment of the invention, the positioning mechanism comprises a weight provided on the dynamic element to rotate the dynamic element to the neutral rotary position by means of the gravity force when the structure does not vibrate.

According to a first variant of this embodiment, the weight is attached to the elastic element.

According to a second variant of this embodiment, the weight is attached to the mass element.

According to a further embodiment of the invention, the positioning mechanism comprises a spring arrangement acting on the dynamic element to rotate the dynamic element to the neutral rotary position when the structure does not vibrate.

Advantageously, the spring arrangement may comprise at least one spring connected to the dynamic element.

According to a first variant of this embodiment, the at least one spring is attached to the elastic element.

According to a second variant of this embodiment, the at least one spring is attached to the mass element.

According to a further embodiment of the invention, the at least one spring comprises a spring having a non-linear characteristic and a progressive behavior with a low moment for low rotation of the dynamic element and a significantly higher moment at a certain rotation of the dynamic element.

With such a non-linear spring, the spring arrangement may thus be designed to have the very specific relation between the rotation relative to the neutral rotary position and the moment (torque) given by the spring arrangement.

According to a further embodiment of the invention, the positioning mechanism comprises a weight and spring arrangement both acting on the dynamic element to rotate the dynamic element to the neutral rotary position when the structure does not vibrate.

According to a further embodiment of the invention, the positioning mechanism comprises a magnet arrangement acting on the dynamic element to rotate the dynamic element to the neutral rotary position when the structure does not vibrate.

Advantageously, the magnet arrangement comprises a first magnet connected to the dynamic element and a second magnet connected to the attachment.

According to a second variant of this embodiment, the first magnet is attached to the mass element.

According to a first variant of this embodiment, the first magnet is attached to the elastic element.

According to a further embodiment of the invention, the positioning mechanism comprises a weight and magnet arrangement both acting on the dynamic element to rotate the dynamic element to the neutral rotary position when the structure does not vibrate.

According to a further embodiment of the invention, the positioning mechanism comprises a spring arrangement and a magnet arrangement both acting on the dynamic element to rotate the dynamic element to the neutral rotary position when the structure does not vibrate.

### BRIEF DESCRIPTION OF THE DRAWINGS

The present invention is now to be explained more closely through a description of various embodiments and with reference to the drawings attached hereto.
- Fig 1: discloses schematically a side view of a vibration absorbing device according a first embodiment of the present invention.
- Fig 2: discloses schematically a cross-section through the vibration absorbing device in a first rotary position.
- Fig 3: discloses schematically a cross-section through the vibration absorbing device in a second rotary position.
- Fig 4: discloses schematically a cross-section through the vibration absorbing device in a neutral rotary position.
- Fig 5: discloses schematically cross-section through a variant of the vibration absorbing device in Fig 1 in a neutral rotary position.
- Fig 6: discloses schematically a cross-section through the vibration absorbing device according to a second embodiment of the present invention.
- Fig 7: discloses schematically a cross-section through the vibration absorbing device according to a third embodiment of the present invention.
- Fig 8: discloses schematically a cross-section through the vibration absorbing device according to a fourth embodiment of the present invention.
- Fig 9: discloses schematically a cross-section through the vibration absorbing device according to a fifth embodiment of the present invention.
- Fig 10: discloses schematically a side view of a vibration absorbing device according to a sixth embodiment of the invention.
- Fig 11: discloses schematically a side view of a vibration absorbing device according to a seventh embodiment of the invention.
- Fig 12: discloses schematically a side view of a vibration absorbing device according to an eight embodiment of the invention.
- Fig 13: discloses schematically a side view of a vibration absorbing device according to a ninth embodiment of the invention.

### DETAILED DESCRIPTION OF VARIOUS EMBODIMENTS

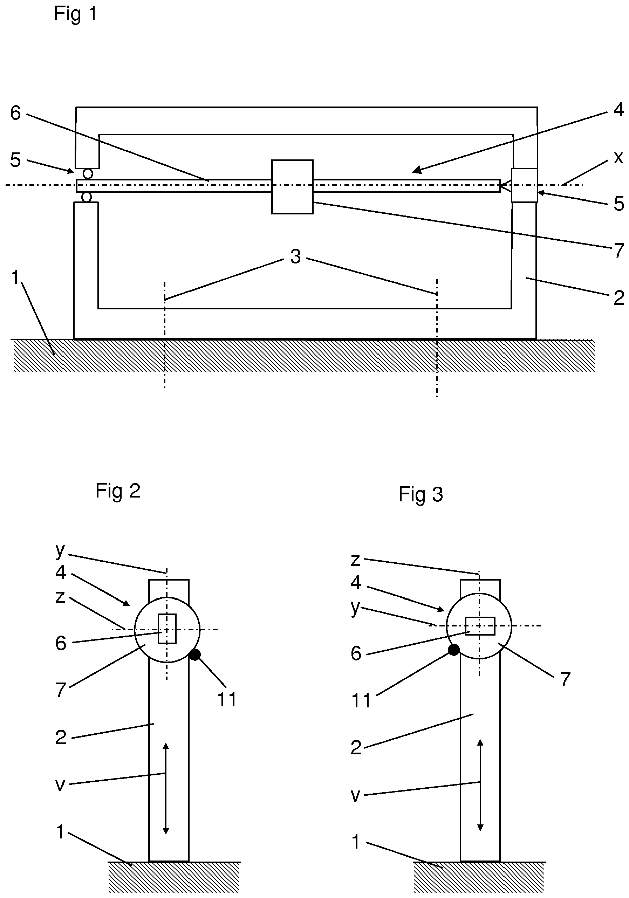

Fig 1 discloses a first embodiment of a vibration absorbing device for reducing vibrations and sounds in a structure 1. The structure 1 may be a vehicle, for instance an aircraft, a car, or a ship, or any stationary structure, for instance a building, a machine tool or any other stationary installation, where it is desirable to reduce sounds or vibrations.

The vibration absorbing device comprises an attachment 2, which is configured to be attached to the structure 1 in any suitable manner, for instance by means of one or more screw joints 3, schematically indicated.

Furthermore, the vibration absorbing device comprises a dynamic element 4. The dynamic element 4 has two opposite ends. In the first embodiment, the two ends are supported by and journalled in a respective one of two rotary bearings 5 to be rotatable around an axis x of rotation. The dynamic element 4 is at least partly elastic and has a spring constant k.

The two rotary bearings 5 are mounted to the attachment 2. The rotary bearings 5 are thus mechanically connected to the structure 1. One, or possibly both, of the two rotary bearings 5 comprises a pin bearing.

In the first embodiment, the dynamic element 4 comprises an elastic element 6 extending along the axis x of rotation. The elastic element 6 may be formed by a rod or any similar elongated element and may be made of any suitable elastic material, for instance spring steel, composite material, etc., to provide elastic properties with said spring constant k permitting the elastic element 6 to flex and oscillate. In the embodiments disclosed, the elastic element 6 is in the form of an elastic rod.

The oscillation of the elastic element 6 may be obtained through an energy-absorbing bending of the elastic element 6. Alternatively, or supplementary, the oscillation of the elastic element 6 may be obtained through an energy-absorbing shearing of the elastic element 6. In this case, the elastic element 6, may have a smaller longitudinal extension along the axis x of rotation than in the embodiments disclosed.

As has been indicated in Fig 1, the two ends held by the rotary bearings 5 are comprised by the elastic element 6.

In the first embodiment, the dynamic element 4 also comprises a mass element 7 provided on the elastic element 6 at a central position of the elastic element 6. The mass element 7 forms a dynamic mass of the dynamic element 4.

It should be noted that it is possible to dispense with the mass element 7. The dynamic mass of the dynamic element 4 may then be provided by the elastic element 6.

The dynamic element 4 has at least partly a cross-section, see Fig 2, which defines a first main axis y, perpendicular to the axis x of rotation, and a second main axis z, perpendicular to the first main axis y and to the axis x of rotation. The dynamic element 4 has a different rigidity with respect to the first main axis y and the second main axis z.

In the first embodiment, the elastic element 6 provides the different rigidity of the dynamic element 4 along the first main axis y and the second main axis z. Fig 2 discloses a cross-section through the elastic element 6.

The different rigidity of the dynamic element 4 may be obtained through a geometric design of the dynamic element 4, i.e. the elastic element 6 and/or the mass element 7. In Figs 2 and 3, the cross-sectional dimension of the elastic element 6 is longer along the first main axis y than along the second main axis z.

The different rigidity of the dynamic element 4 may also be obtained through an orthotropic material of the dynamic element 4, i.e. the elastic element 6 and/or the mass element 7.

In case of a vibration in the structure 1, the dynamic element 4 is brought to take a first rotary position, in which the dynamic element 4 will oscillate along the first main axis y, or a second rotary position, in which the dynamic element 4 will oscillate along the second main axis z.

In Fig 2, the dynamic element 4 is adjusted to the first rotary position, in which the first main axis y is parallel to the vibration direction v. The structure 1 then vibrates with an angular resonance frequency ω_{y} = (k_{y}/m)^{½} of the vibration absorbing device, wherein k_{y} corresponds to the spring constant of the dynamic element 4 with respect to the first main axis y and m is the effective modal mass. The dynamic element 4 will oscillate in the direction of the first main axis y.

In Fig 3, the dynamic element 4 is rotated 90° and has thus adjusted itself to the second rotary direction in which the second main axis z is parallel to the vibration direction v. The structure 1 then vibrates with an angular resonance frequency ω_{z} = (k_{z}/m)^{½} of the vibration absorbing device, wherein k_{z} corresponds to the spring constant of the dynamic element 4 with respect to the second main axis z. The dynamic element 4 will oscillate in the direction of the second main axis z.

If the structure 1 vibrates with the angular frequency ω_{z} and the dynamic element 4 is in the first rotary position, the dynamic element 4 may not rotate to the second rotary position in which the oscillation direction is parallel with the vibration direction v.

In the same way, if the structure 1 vibrates with the angular frequency ω_{y} and the dynamic element 4 is in the second rotary position, the dynamic element 4 may not rotate to the first rotary position in which the oscillation direction is parallel with the vibration direction v.

In order to prevent the dynamic element 4 from being locked in such a disadvantageous position, the vibration absorbing device comprises a positioning mechanism configured to position the dynamic element 4 in a neutral rotary position, different from the first rotary position and the second rotary position, when the structure 1 does not vibrate.

Consequently, in case of a vibration in the structure 1, the dynamic element 4 is brought to take the first rotary position, in which the dynamic element 4 will oscillate along the first main axis y, or the second rotary position, in which the dynamic element 4 will oscillate along the second main axis z, if the frequency of the vibration is such that it matches one of the angular resonance frequencies ω_{z}, ω_{y} of the vibration absorbing device.

The vibration absorbing device is thus self-adaptable to achieve maximum vibrations absorption of two different vibration frequencies.

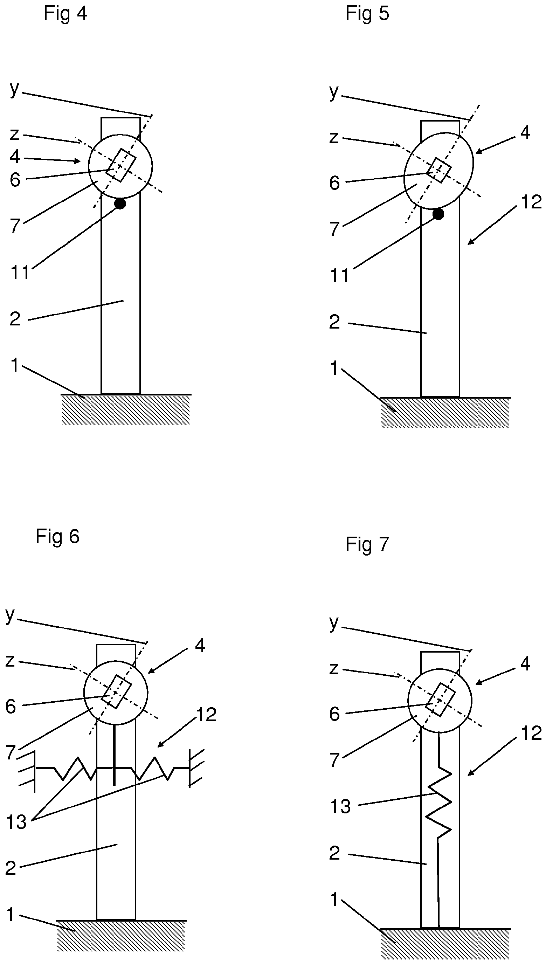

According to the first embodiment, the positioning mechanism comprises a weight 11 provided on the dynamic element 4. The weight 11 will rotate the dynamic element 4 to the neutral rotary position, see Fig 4, by means of the gravity force when the structure 1 does not vibrate. The weight 11 is attached to the mass element 7 as can be seen in Figs 2-4.

It should be noted, that the weight 11 alternatively could be attached to the elastic element 6.

Fig 5 illustrates a variant of the positioning mechanism in Figs 2-4, which differs therefrom in that the different rigidity is obtained through a geometric design of the mass element 7. In Fig 5, the cross-sectional dimension of the mass element 7 is longer along the first main axis y than along the second main axis z, in particular oval as illustrated in Fig 5. The elastic element 6 may have a square cross-section, or circular cross-section.

According to a second embodiment, the positioning mechanism comprises a spring arrangement 12 acting on the dynamic element 4 to rotate the dynamic element 4 to the neutral rotary position when the structure 1 does not vibrate, see Fig 6. In the second embodiment, the spring arrangement 12 comprise two springs 13, which are connected to the dynamic element 4. The two springs 12 are attached to the mass element 7 at a respective first end and are attached to the attachment 2 at a respective second end.

Fig 7 discloses a third embodiment, which differs from the fourth embodiment in that the spring arrangement 12 comprises only one spring 13 holding the dynamic element 4 in the neutral rotary position. The spring 13 is attached to the mass element 7 at a first end and to the attachment 2 at a second end.

It should be noted, that the springs 13, or said one spring 13, instead of being attached to the mass element 7, alternatively, could be attached to the elastic element 6.

The spring or springs 13 may have a non-linear characteristic. In particular, the spring or springs 13 may have a progressive behavior with a low moment (torque) for low rotation of the dynamic element 4 and a significantly higher moment (torque) at a certain higher rotation of the dynamic element 4.

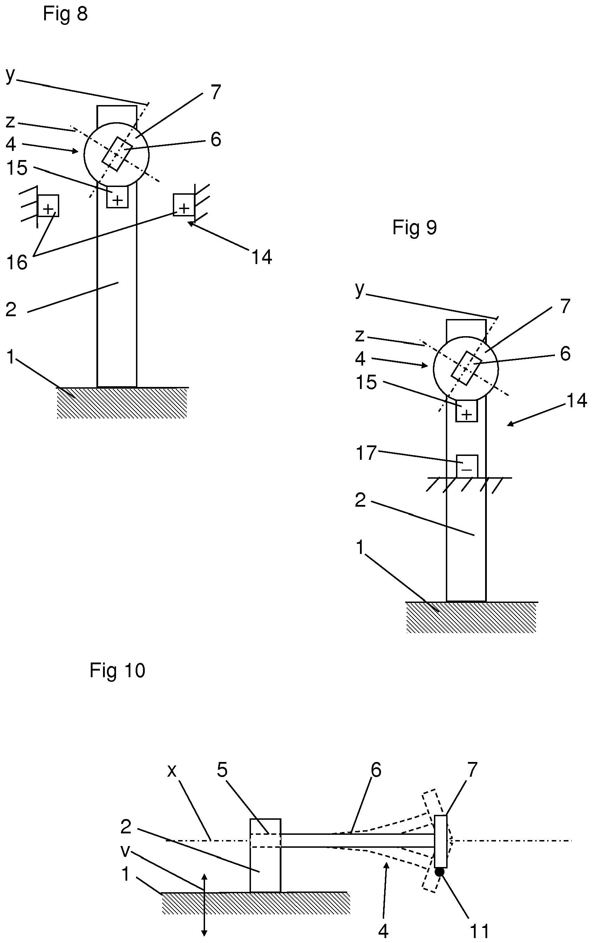

According to a fourth embodiment, the positioning mechanism comprises a magnet arrangement 14 acting on the dynamic element 4 to rotate the dynamic element 4 to the neutral rotary position, see Fig 8, when the structure 1 does not vibrate. The magnet arrangement 14 comprises a first magnet 15 attached to the mass element 7 and two second magnets 16 attached to the attachment 2. The first and second magnets 15 and 16 have the same polarity, positive or negative, i.e. they are repelling each other.

Fig 9 discloses a fifth embodiment, which differs from the fourth embodiment in that the second magnets 16 have been replaced by one magnet 17. In this embodiment, the first magnet 15 and the second magnet 17 have different polarity, i.e. they are attracting each other.

It should be noted that the positioning mechanism may comprise a combination of a weight 11 and spring arrangement 12, a weight 11 and a magnet arrangement 14, a spring arrangement 12 and magnet arrangement 14, or even a weight 11, a spring arrangement 12 and magnet arrangement 14. Such combinations may act on the dynamic element 4 to rotate the dynamic element 4 to the neutral rotary position when the structure 1 does not vibrate.

The sounds and vibrations may emanate directly from an engine, transmission or the like of a vehicle or a stationary installation. However, the vibration absorbing device may also be used to alter and reduce the peak of a resonance in the structure 1, for instance squeal from brakes. This as a result of the inherent energy absorption capability for the two angular resonance frequencies ω_{y} and ω_{z}.

The vibration absorbing device will influence vibrations with any vibration frequency, not only when the device is in a specific rotary position. The magnitude of the influence will depend on the excitation frequency and the rotary position, with particularly high influence when the excitation frequency coincides with resonance of the device, as given by the specific rotary position.

The positioning mechanism assures that the vibration absorbing device is forced towards the neutral rotary position when no vibrations are present. The neutral rotary position can be selected for each specific structure in order to adapt for specific structural resonances and specific excitation frequencies. For example the neutral position me be selected to improve the adaptation to a frequency of vibration that normally is first in an operating cycle like a flight envelope. Similarly the neutral position may be selected to improve the adaptation to reduce the statistically most likely resonance while the adaptation to less likely resonances thus becomes slower.

Fig 10 discloses a sixth embodiment, which differs from the previous embodiments in that the dynamic element 4 is supported by one rotary bearing 5 only. In a first variant, the rotary bearing 5 engages one end of the dynamic element 4, i.e. the elastic element 6, whereas the other end of the dynamic element 4 is free. A mass element 7 may be provided at the other free end of the elastic element 6.

In a second variant, not disclosed, the rotary bearing 5 engages the dynamic element 4, i.e. the elastic element 6, at a central position thereof, wherein both ends of the dynamic element 4 are free. A mass elements 7 may be provided at a respective one of the free ends of the elastic element 6.

These variants are explained more closely in WO 2006/083223 discussed above.

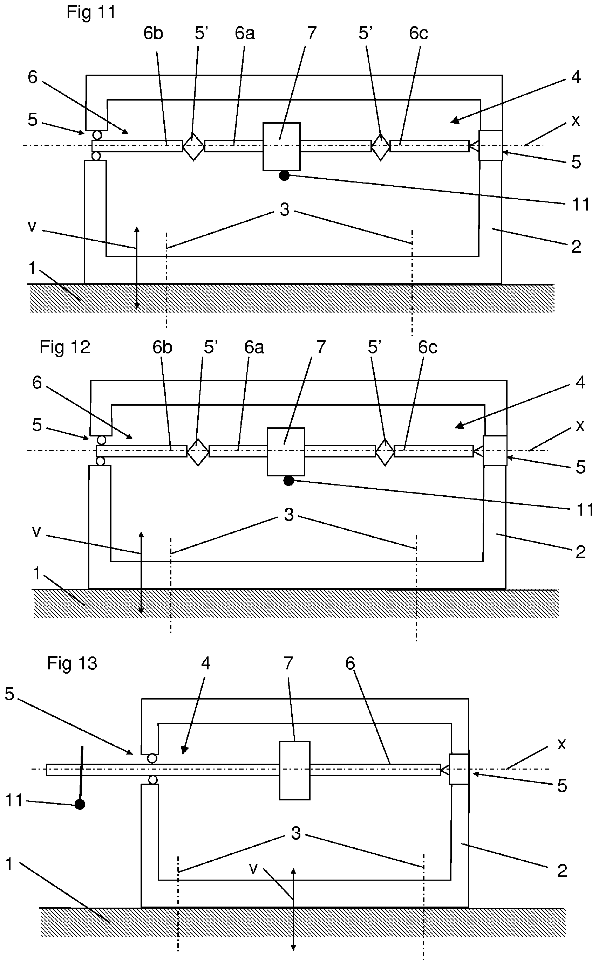

Fig 11 discloses a seventh embodiment, which differs from the previous embodiments in that the elastic element 6 comprises three elastic segments, namely an intermediate segment 6a, a first outer segment 6b and a second outer segment 6c, which extend along the axis x of rotation and are rotatable in relation to each other and the attachment 2. The intermediate segment 6a is connected to the first outer segment 6b by means of a rotary bearing 5' and to the second outer segment 6b by means of a rotary bearing 5'. All of the segments 6a-6b provides the different rigidity as the elastic element 6 of the previous embodiments. The independently rotatable segments 6a-6c may permit the vibration absorbing device to adapt itself to possibly eight different angular resonance frequencies.

In the seventh embodiment, the intermediate segment 6a is provided with a mass element 7. A positioning mechanism comprising a weight 11 is provided on the intermediate segment 6a. Also the positioning mechanisms discussed above in the second to fifth embodiments may be employed. It is also to be noted that also the first and second outer segments 6b, 6c may, but do not have to, comprise a positioning mechanism as indicated in Fig 11.

Fig 12 discloses an eight embodiment, which differs from the seventh embodiment in that the first outer segment 6b and the second outer segment 6c are coupled to each outer by means of a suitable mechanical element 18, schematically indicated as a dashed line. Thanks to the mechanical element 18, symmetry is achieved. The first outer segment 6b and the second outer segment 6c will act as one elastic element, which, together with the intermediate segment 6a, permits the vibration absorbing device to adapt itself to four different angular resonance frequencies.

It should be understood, the dynamic element 4 may comprise another number of elastic elements than disclosed above in order to create symmetry and/or to permit the vibration absorbing device to adapt itself to several different angular frequencies.

Fig 13 discloses a ninth embodiment of the vibration absorbing device, which differs from the first embodiment in that the positioning mechanism is provided on the rod or elastic element 6 outside the rotary bearings 5. In the ninth embodiment, the positioning mechanism comprises a weight 11. It is to be noted that the positioning mechanism of the ninth embodiment may also comprise a spring arrangement 12 and/or a magnet arrangement 14 as discussed above.

The present invention is not limited to the embodiments disclosed but may be varied or modified within the scope of the following claims.

It should be noted that the progressive behavior mentioned above may also be achieved with a positioning mechanism comprising the magnet arrangement 14, or the weight 11.

## Claims

1. A vibration absorbing device for reducing vibrations and sounds in a structure (1), comprising
an attachment (2), which is configured to be attached to the structure (1),
at least one rotary bearing (5), which is mounted to the attachment (2) and thus is mechanically connected to the structure (1), and
a dynamic element (4) journalled in the rotary bearing (5) to be rotatable around an axis (x) of rotation,
wherein the dynamic element (4) is at least partly elastic,
wherein the dynamic element (4) at least partly has a cross-section, which defines a first main axis (y), perpendicular to the axis (x) of rotation, and a second main axis (z), perpendicular to the first main axis (y) and to the axis (x) of rotation, the dynamic element (4) having a different rigidity with respect to the first main axis (y) and the second main axis (z), and
wherein a vibration in a vibration direction (v) in the structure (1) will rotate the dynamic element (4) to a first rotary position, in which the dynamic element (4) will oscillate along the first main axis (y), or to a second rotary position, which is perpendicular to the first rotary position and in which the dynamic element (4) will oscillate along the second main axis (z), depending on the frequency of the vibration,
**characterized in that** the device comprises a positioning mechanism configured to position the dynamic element (4) in a neutral rotary position, different from the first rotary position and the second rotary position, when the structure (1) does not vibrate.

2. A vibration absorbing device according to claim 1, wherein the dynamic element (4) comprises an elastic element (6) extending along the axis (x) of rotation.

3. A vibration absorbing device according to claim 2, wherein the elastic element (6) provides said different rigidity.

4. A vibration absorbing device according to any one of claims 2 and 3, wherein the dynamic element (4) has a mass element (7) provided on the elastic element (6) and forming a dynamic mass.

5. A vibration absorbing device according to claim 4, wherein the mass element (7) provides said different rigidity.

6. A vibration absorbing device according to any one of claims 2 to 5, wherein the elastic element (6) comprises an intermediate segment (6a), a first outer segment (6b) and a second outer segment (6c), which extend along the axis (x) of rotation and are rotatable in relation to each other and the attachment (2).

7. A vibration absorbing device according to claim 6, wherein, the first outer segment (6b) and the second outer segment (6c) are mechanically coupled to each other.

8. A vibration absorbing device according to any one of the preceding claims, wherein the vibration absorbing device comprises two rotary bearings (5), which are mounted to the attachment (2) and thus are mechanically connected to the structure (1), and wherein the dynamic element (4) at a respective end thereof is journalled in the two rotary bearings (5) to be rotatable around the axis (x) of rotation.

9. A vibration absorbing device according to claim 8, wherein at least one of the rotary bearings (5) comprises a pin bearing.

10. A vibration absorbing device according to any one of the preceding claims, wherein the positioning mechanism comprises a weight (11) provided on the dynamic element (4) to rotate the dynamic element (4) to the neutral rotary position when the structure (1) does not vibrate.

11. A vibration absorbing device according to any one of the preceding claims, wherein the positioning mechanism comprises a spring arrangement (12) acting on the dynamic element (4) to rotate the dynamic element (4) to the neutral rotary position when the structure (1) does not vibrate.

12. A vibration absorbing device according to claim 11, wherein the spring arrangement (12) comprises at least one spring (13) connected to the dynamic element (4).

13. A vibration absorbing device according to claim 12, wherein the at least one spring (13) comprises a spring having a non-linear characteristic and a progressive behavior with a low moment for low rotation of the dynamic element (4) and a significantly higher moment at a certain rotation of the dynamic element (4).

14. A vibration absorbing device according to any one of the preceding claims, wherein the positioning mechanism comprises a magnet arrangement (14) acting on the dynamic element (4) to rotate the dynamic element (4) to the neutral rotary position when the structure (1) does not vibrate.

15. A vibration absorbing device according to claim 14, wherein the magnet arrangement (14) comprises a first magnet (15) connected to the dynamic element (4) and a second magnet (16, 17) connected to the attachment (2).

## Patentansprüche

1. Vibrationsabsorbierende Vorrichtung zur Reduzierung von Vibrationen und Schall in einer Struktur (1), umfassend:
eine Befestigung (2), die dazu konfiguriert ist, an der Struktur (1) befestigt zu sein,
mindestens ein Drehlager (5), das an der Befestigung (2) angebracht ist und somit mechanisch mit der Struktur (1) verbunden ist; und
ein dynamisches Element (4), das in dem Drehlager (5) um eine Drehachse (x) drehbar gelagert ist,
wobei das dynamische Element (4) mindestens teilweise elastisch ist,
wobei das dynamische Element (4) zumindest teilweise einen Querschnitt aufweist, der eine erste Hauptachse (y), die senkrecht zur Drehachse (x) ist, und eine zweite Hauptachse (z), die senkrecht zu der ersten Hauptachse (y) und zu der Drehachse (x) ist, definiert, wobei das dynamische Element (4) eine unterschiedliche Steifigkeit in Bezug auf die erste Hauptachse (y) und die zweite Hauptachse (z) aufweist, und
wobei eine Vibration in einer Vibrationsrichtung (v) in der Struktur (1) das dynamische Element (4) je nach Frequenz der Vibration in eine erste Drehposition, in der das dynamische Element (4) entlang der ersten Hauptachse (y) schwingen wird, oder in eine zweite Drehposition drehen wird, die senkrecht zu der ersten Drehposition ist und in der das dynamische Element (4) entlang der zweiten Hauptachse (z) schwingen wird,
**dadurch gekennzeichnet, dass** die Vorrichtung einen Positionierungsmechanismus umfasst, der dazu konfiguriert ist, das dynamische Element (4) in einer neutralen Drehposition zu positionieren, die sich von der ersten Drehposition und der zweiten Drehposition unterscheidet, wenn die Struktur (1) nicht vibriert.

2. Vibrationsabsorbierende Vorrichtung nach Anspruch 1, wobei das dynamische Element (4) ein elastisches Element (6) umfasst, das sich entlang der Drehachse (x) erstreckt.

3. Vibrationsabsorbierende Vorrichtung nach Anspruch 2, wobei das elastische Element (6) die unterschiedliche Steifigkeit bereitstellt.

4. Vibrationsabsorbierende Vorrichtung nach einem der Ansprüche 2 und 3, wobei das dynamische Element (4) ein Masseelement (7) aufweist, das auf dem elastischen Element (6) bereitgestellt ist und eine dynamische Masse bildet.

5. Vibrationsabsorbierende Vorrichtung nach Anspruch 4, wobei das Masseelement (7) die unterschiedliche Steifheit aufweist.

6. Vibrationsabsorbierende Vorrichtung nach einem der Ansprüche 2 bis 5, wobei das elastische Element (6) ein Zwischensegment (6a), ein erstes Außensegment (6b) und ein zweites Außensegment (6c) umfasst, die sich entlang der Drehachse (x) erstrecken und in Bezug aufeinander und auf die Befestigung (2) drehbar sind.

7. Vibrationsabsorbierende Vorrichtung nach Anspruch 6, wobei das erste Außensegment (6b) und das zweite Außensegment (6c) mechanisch aneinandergekoppelt sind.

8. Vibrationsabsorbierende Vorrichtung nach einem der vorstehenden Ansprüche, wobei die Vibrationsabsorbierende Vorrichtung zwei Drehlager (5) umfasst, die an der Befestigung (2) angebracht sind und somit mechanisch mit der Struktur (1) verbunden sind, und wobei das dynamische Element (4) an einem jeweiligen Ende davon in den zwei Drehlagern (5) drehbar um die Drehachse (x) gelagert ist.

9. Vibrationsabsorbierende Vorrichtung nach Anspruch 8, wobei mindestens eines der Drehlager (5) ein Nadellager umfasst.

10. Vibrationsabsorbierende Vorrichtung nach einem der vorstehenden Ansprüche, wobei der Positionierungsmechanismus ein Gewicht (11) umfasst, dass an dem dynamischen Element (4) bereitgestellt ist, um das dynamische Element (4) in die neutrale Drehposition zu drehen, wenn die Struktur (1) nicht vibriert.

11. Vibrationsabsorbierende Vorrichtung nach einem der vorstehenden Ansprüche, wobei der Positionsmechanismus eine Federanordnung (12) umfasst, die auf das dynamische Element (4) einwirkt, um das dynamische Element (4) in die neutrale Drehposition zu drehen, wenn die Struktur (1) nicht vibriert.

12. Vibrationsabsorbierende Vorrichtung nach Anspruch 11, wobei die Federanordnung (12) mindestens eine Feder (13) umfasst, die mit dem dynamischen Element (4) verbunden ist.

13. Vibrationsabsorbierende Vorrichtung nach Anspruch 12, wobei die mindestens eine Feder (13) eine Feder umfasst, die ein nichtlineares Merkmal und ein progressives Verhalten mit einem geringen Moment für eine geringe Drehung des dynamischen Elements (4) und einem wesentlich höheren Moment bei einer bestimmten Drehung des dynamischen Elements (4) aufweist.

14. Vibrationsabsorbierende Vorrichtung nach einem der vorstehenden Ansprüche, wobei der Positionierungsmechanismus eine Magnetanordnung (14) umfasst, die auf das dynamische Element (4) einwirkt, um das dynamische Element (4) in die neutrale Drehposition zu drehen, wenn die Struktur (1) nicht vibriert.

15. Vibrationsabsorbierende Vorrichtung nach Anspruch 14, wobei die Magnetanordnung (14) einen ersten Magneten (15), der mit dem dynamischen Element (4) verbunden ist, und einen zweiten Magneten (16,17), der mit der Befestigung (2) verbunden ist, umfasst.

## Revendications

1. Dispositif d'absorption de vibrations pour réduire des vibrations et des sons dans une structure (1), comprenant
une attache (2), qui est configurée pour être attachée à la structure (1),
au moins un palier rotatif (5), qui est monté sur l'attache (2) et est ainsi relié mécaniquement à la structure (1), et
un élément dynamique (4) tourillonné dans le palier rotatif (5) pour pouvoir tourner autour d'un axe (x) de rotation,
dans lequel l'élément dynamique (4) est au moins partiellement élastique,
dans lequel l'élément dynamique (4) a au moins partiellement une section transversale, qui définit un premier axe principal (y), perpendiculaire à l'axe (x) de rotation, et un second axe principal (z), perpendiculaire au premier axe principal (y) et à l'axe (x) de rotation, l'élément dynamique (4) ayant une rigidité différente par rapport au premier axe principal (y) et au second axe principal (z), et
dans lequel une vibration dans une direction de vibration (v) dans la structure (1) va faire tourner l'élément dynamique (4) vers une première position de rotation, dans laquelle l'élément dynamique (4) va osciller le long du premier axe principal (y), ou vers une seconde position de rotation, qui est perpendiculaire à la première position de rotation et dans laquelle l'élément dynamique (4) va osciller le long du second axe principal (z), en fonction de la fréquence de la vibration,
**caractérisé en ce que** le dispositif comprend un mécanisme de positionnement configuré pour positionner l'élément dynamique (4) dans une position de rotation neutre, différente de la première position de rotation et de la seconde position de rotation, lorsque la structure (1) ne vibre pas.

2. Dispositif d'absorption de vibrations selon la revendication 1, dans lequel l'élément dynamique (4) comprend un élément élastique (6) s'étendant le long de l'axe (x) de rotation.

3. Dispositif d'absorption de vibrations selon la revendication 2, dans lequel l'élément élastique (6) fournit ladite rigidité différente.

4. Dispositif d'absorption de vibrations selon l'une quelconque des revendications 2 et 3, dans lequel l'élément dynamique (4) a un élément de masse (7) prévu sur l'élément élastique (6) et formant une masse dynamique.

5. Dispositif d'absorption de vibrations selon la revendication 4, dans lequel l'élément de masse (7) fournit ladite rigidité différente.

6. Dispositif d'absorption de vibrations selon l'une quelconque des revendications 2 à 5, dans lequel l'élément élastique (6) comprend un segment intermédiaire (6a), un premier segment externe (6b) et un second segment externe (6c), qui s'étendent le long de l'axe (x) de rotation et peuvent tourner l'un par rapport à l'autre et par rapport à l'attache (2).

7. Dispositif d'absorption de vibrations selon la revendication 6, dans lequel le premier segment externe (6b) et le second segment externe (6c) sont couplés mécaniquement l'un à l'autre.

8. Dispositif d'absorption de vibrations selon l'une quelconque des revendications précédentes, dans lequel le dispositif d'absorption de vibrations comprend deux paliers rotatifs (5), qui sont montés sur l'attache (2) et sont ainsi reliés mécaniquement à la structure (1), et dans lequel l'élément dynamique (4), à une extrémité respective de celui-ci, est tourillonné dans les deux paliers rotatifs (5) pour pouvoir tourner autour de l'axe (x) de rotation.

9. Dispositif d'absorption de vibrations selon la revendication 8, dans lequel au moins l'un des paliers rotatifs (5) comprend un palier d'axe.

10. Dispositif d'absorption de vibrations selon l'une quelconque des revendications précédentes, dans lequel le mécanisme de positionnement comprend un poids (11) prévu sur l'élément dynamique (4) pour faire tourner l'élément dynamique (4) vers la position de rotation neutre lorsque la structure (1) ne vibre pas.

11. Dispositif d'absorption de vibrations selon l'une quelconque des revendications précédentes, dans lequel le mécanisme de positionnement comprend un agencement à ressort (12) agissant sur l'élément dynamique (4) pour faire tourner l'élément dynamique (4) vers la position de rotation neutre lorsque la structure (1) ne vibre pas.

12. Dispositif d'absorption de vibrations selon la revendication 11, dans lequel l'agencement de ressort (12) comprend au moins un ressort (13) connecté à l'élément dynamique (4).

13. Dispositif d'absorption de vibrations selon la revendication 12, dans lequel le au moins un ressort (13) comprend un ressort ayant une caractéristique non linéaire et un comportement progressif avec un moment bas pour une faible rotation de l'élément dynamique (4) et un moment significativement plus élevé à une certaine rotation de l'élément dynamique (4).

14. Dispositif d'absorption de vibrations selon l'une quelconque des revendications précédentes, dans lequel le mécanisme de positionnement comprend un agencement magnétique (14) agissant sur l'élément dynamique (4) pour faire tourner l'élément dynamique (4) vers la position de rotation neutre lorsque la structure (1) ne vibre pas.

15. Dispositif d'absorption de vibrations selon la revendication 14, dans lequel l'agencement magnétique (14) comprend un premier aimant (15) relié à l'élément dynamique (4) et un second aimant (16, 17) relié à l'attache (2).
